(19) **Europäisches Patentamt / European Patent Office / Office européen des brevets**

(11) **EP 2 515 481 A1**

(12) # EUROPEAN PATENT APPLICATION
published in accordance with Art. 153(4) EPC

(43) Date of publication:
**24.10.2012 Bulletin 2012/43**

(51) Int Cl.:
**H04L 12/26** (2006.01)

(21) Application number: **10837013.1**

(22) Date of filing: **03.12.2010**

(86) International application number:
**PCT/CN2010/079428**

(87) International publication number:
**WO 2011/072576 (23.06.2011 Gazette 2011/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2009 CN 200910258122**

(71) Applicant: **Huawei Technologies Co., Ltd.**
**Shenzhen, Guangdong 518129 (CN)**

(72) Inventors:
- **HUANG, Changfu**
  **Shenzhen**
  **Guangdong 518129 (CN)**
- **LI, Xiaoshuang**
  **Shenzhen**
  **Guangdong 518129 (CN)**
- **YANG, Fan**
  **Shenzhen**
  **Guangdong 518129 (CN)**
- **FU, Miaoqiang**
  **Shenzhen**
  **Guangdong 518129 (CN)**

(74) Representative: **Haley, Stephen**
**Gill Jennings & Every LLP**
**The Broadgate Tower**
**20 Primrose Street**
**London EC2A 2ES (GB)**

(54) **TRANSMISSION CONTROL METHOD, ACCESS EQUIPMENT AND TRANSMISSION SYSTEM**

(57) Embodiments of the present invention disclose a transport control method, an access device, and a transport system. The transport control method includes: monitoring a current impairment index of a network; determining, according to a transport quality grade corresponding to the monitored current impairment index of the network, the number of redundant blocks carried in a data packet to be sent and/or a packetization duration of the data packet to be sent, where the number of redundant blocks carried in the data packet and/or the packetization duration of the data packet has a preset mapping relationship with a transport quality grade; and packetizing and sending the data packet according to the determined number of the carried redundant blocks and/or the determined packetization duration. The technical solutions provided in the embodiments of the present invention may improve flexibility of transport control and is beneficial to appropriate adaptation to real-time dynamic changes of a network impairment condition.

Monitor a current impairment index of a network — 310

Determine, according to a transport quality grade corresponding to the monitored current impairment index of the network, the number of redundant blocks carried in a data packet to be sent and/or a packetization duration of the data packet to be sent, where the number of redundant blocks carried in the data packet and/or the packetization duration of the data packet has a preset mapping relationship with a transport quality grade — 320

Packetize and send the data packet according to the determined number of the carried redundant blocks and/or the determined packetization duration — 330

FIG. 3

EP 2 515 481 A1

**Description**

**FIELD OF THE INVENTION**

The present invention relates to the field of communications technologies, and in particular, to a transport control method, an access device, and a transport system.

**BACKGROUND OF THE INVENTION**

The Real-Time Transport Protocol (RTP) may be used to support transport of data having a high real-time requirement (for example, audio data). RTP may provide a payload type indication (that is a data type and a coding method), a data packet sequence number, a data sending timestamp, and a data source identifier. A receiving end may correctly recombine an original signal according to the indication information.

RFC 2198 is an RTP payload format that is able to be used for transporting audio data having a redundant code. Each packet in RTP payload format may carry a primary coding module, and one or multiple redundant blocks (which may be referred to as redundant blocks for short). Problems such as a network packet loss may be solved by performing redundancy controlling on the audio data.

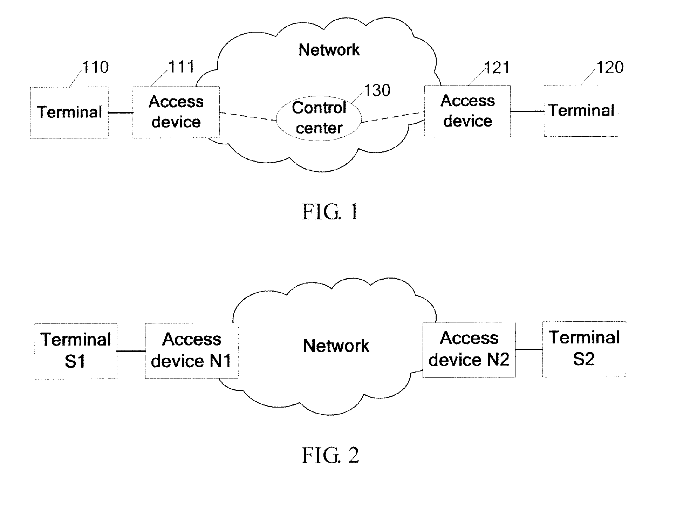

Referring to FIG. 1, in the prior art, before terminals 110 and 120 transport data, for example, the audio data, a controlling center 130 on a network usually presets a fixed number of redundant blocks (for example, each RTP packet fixedly carries three redundant blocks) for an RTP packet bearing services of the terminals 110 and 120, and notifies the set number of redundant modules to an access device 111 of the terminal 110 and an access device 121 of the terminal 120. Accordingly, the access devices 111 and 121 perform RTP packet encapsulation on audio data transported between the terminals 110 and 120.

The prior art has the following problems: in existing data transport, a fixed number of redundant blocks are used to encapsulate data for each service. Therefore, transport control lacks flexibility. In addition, adaptability to real-time dynamic changes of a network impairment condition is poor.

**SUMMARY OF THE INVENTION**

Embodiments of the present invention provide a transport control method, an access device, and a transport system, which are capable of improving flexibility of transport control and are beneficial to appropriate adaptation to real-time dynamic changes of a network impairment condition.

To solve the preceding technical problems, embodiments of the present invention provide the following technical solutions.

An embodiment of the present invention provides a transport control method, which includes:

monitoring a current impairment index of a network;
determining, according to a transport quality grade corresponding to the monitored current impairment index of the network, the number of redundant blocks that are carried in a data packet to be sent and/or a packetization duration of the data packet to be sent, where the number of redundant blocks carried in the data packet and/or the packetization duration of the data packet has a preset mapping relationship with a transport quality grade; and
packetizing and sending the data packet according to the determined number of the carried redundant blocks and/or the determined packetization duration.

An embodiment of the present invention further provides an access device, which includes:

a monitoring module, configured to monitor a current impairment index of a network;
a determining module, configured to determine, according to a transport quality grade corresponding to the current impairment index of the network monitored by the monitoring module, the number of redundant blocks carried in a data packet to be sent and/or a packetization duration of the data packet to be sent, where the number of redundant blocks carried in the data packet and/or the packetization duration of the data packet has a preset mapping relationship with a transport quality grade; and
a packetizing and sending module, configured to packetize and send the data packet according to the number of the carried redundant blocks and/or the packetization duration determined by the determining module.

An embodiment of the present invention further provides a transport system, which includes:

the access device as described in the preceding embodiment.

As can be seen from the above, the technical solutions adopted in the embodiments of the present invention have the following beneficial effects: The current impairment index of the network is monitored, and the number of redundant blocks carried in the data packet to be sent and/or the packetization duration of the data packet to be sent is determined according to the transport quality grade corresponding to the monitored current impairment index of the network. In this manner, the current transport quality of the network has a real-time correlation with the number of redundant blocks carried in the data packet and/or the packetization duration of the data packet, which improves the flexibility of the transport control and is beneficial to the appropriate adaptation to the real-time dynamic changes of the network impairment condition.

**BRIEF DESCRIPTION OF THE DRAWINGS**

To make the technical solutions of the present invention clearer, the accompanying drawings for illustrating the embodiments of the present invention or the prior art are described briefly below. Apparently, the accompanying drawings illustrate only some embodiments of the present invention, and persons of ordinary skill in the art can derive other accompanying drawings from these accompanying drawings without any creative effort.

FIG. 1 is a network architecture diagram of data transport according to the prior art;
FIG. 2 is a network architecture diagram of data transport according to an embodiment of the present invention;
FIG. 3 is a brief flowchart of a transport control method according to Embodiment 1 of the present invention;
FIG. 4 is a brief flowchart of a transport control method according to Embodiment 2 of the present invention; and
FIG. 5 is a schematic diagram of an access device according to Embodiment 3 of the present invention.

**DETAILED DESCRIPTION OF THE EMBODIMENTS**

Embodiments of the present invention provides a transport control method, an access device, and a transport system, which are capable of improving flexibility of transport control and are beneficial to appropriate adaptation to real-time dynamic changes of a network impairment condition.

To make the objectives, features, advantages of the present invention clearer and easy to understand, the technical solutions of the present invention are clearly and completely described below with reference to the accompanying drawings in the embodiments of the present invention. Evidently, the described embodiments are only a part rather than all of the embodiments of the present invention. Persons of ordinary skill in the art may derive other embodiments from the embodiments in the present invention without making any creative effort, and all such embodiments fall within the protection scope of the present invention.

The technical solutions in the embodiments of the present invention may be specifically implemented, for example, based on network topology architecture as shown in FIG. 2. In the network topology architecture as shown in FIG. 2, an access device N1 of a terminal S1 and an access device N2 of a terminal S2 may packetize and send service data between the terminal S1 and the terminal S2, so that service interaction between the terminal S1 and the terminal S2 is implemented.

**Embodiment 1**

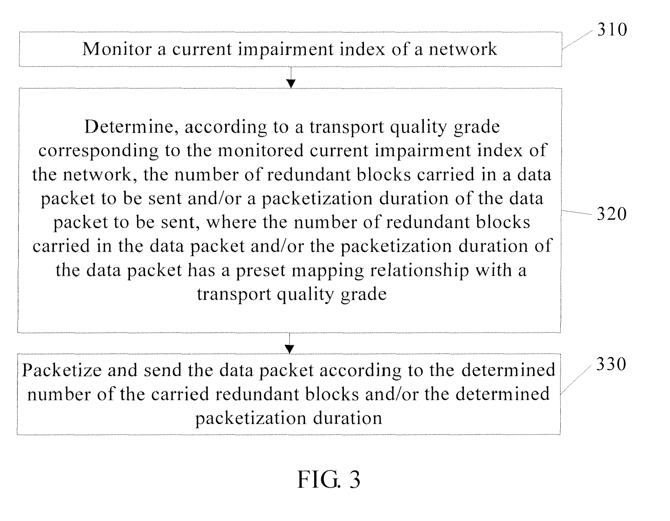

Referring to FIG. 3, a transport control method according to Embodiment 1 of the present invention may include the following steps:

310. Monitor a current impairment index of a network.

The current impairment index of the network may be a current packet loss ratio, a delay, and so on. In an actual application, multiple manners may be selected to monitor the current impairment index of the network. For example, the current impairment index of the network may be obtained by receiving a related data packet.

The impairment index of the network may change as the time goes by. Therefore, the network may be monitored in real time to obtain the current impairment index of the network in time.

320. Determine, according to a transport quality grade corresponding to the monitored current impairment index of the network, the number of redundant blocks carried in a data packet to be sent and/or a packetization duration of the data packet to be sent, where the number of redundant blocks carried in the data packet and/or the packetization duration of the data packet has a preset mapping relationship with a transport quality grade.

In an application scenario, a mapping relationship may be established between the impairment index of the network and the transport quality grade (including a transport packet loss quality grade and a transport delay quality grade); and a mapping relationship may be preset between the number of redundant blocks carried in the data packet and/or the packetization duration of the data packet and the transport quality grade. In this manner, the current transport quality grade of the network may be determined according to the monitored current impairment index of the network, and the number of redundant blocks carried in the data packet to be sent and/or the packetization duration of the data packet to be sent may be determined according to the current transport quality grade of the network.

That is to say, the number of redundant blocks carried in the data packet to be sent may be determined according to the transport quality grade corresponding to the monitored current packet loss ratio of the network; and/or the packetization duration of the data packet to be sent may be determined according to the transport quality grade corresponding to the monitored current delay of the network.

For example, four transport packet loss quality grades, A1 (good), A2 (normal), A3 (poor) and A4 (bad), may be set. Each transport packet loss quality grade corresponds to a particular range of packet loss ratio. For example, a packet loss ratio corresponding to the grade A1 is 0%, a range of packet loss ratio corresponding to the grade A2 is 0%-1%, a range of packet loss ratio corresponding to the grade A3 is 1%-3%, and a range of packet loss ratio corresponding to the grade A4 is greater than 3%. The preset number of redundant blocks corresponding to the grade A1 may be 0, the number of redundant blocks corresponding to the grade A2 may be 1, the number of redundant blocks corresponding to the grade A3 may be 2, and the number of redundant blocks corresponding to the grade A4 may be 3 or a larger value. For example, if the transport packet loss quality grade corresponding to the current packet loss ratio of the network is A2, it is determined that the number of redundant blocks carried in the data packet to be sent is 1, and so on.

It may be understood that a manner for determining the packetization duration of the data packet to be sent is similar to that for determining the number of redundant blocks carried in the data packet to be sent, which is not detailed here.

330. Packetize and send the data packet according to the determined number of the carried redundant blocks and/or the determined packetization duration.

In the actual application, after the number of redundant blocks carried in the data packet to be sent and/or the packetization duration of the data packet to be sent is determined, the data packet is packetized and sent according to the determined number of the carried redundant blocks and/or the determined packetization duration. After receiving the data packet, a receiving device restores service data borne by the data packet. The data packet may be an RTP packet or a data packet in another format; and the service data borne by the data packet may be audio data or service data of another type.

It should be noted that the preceding technical solution according to this embodiment may be specifically implemented on an access device, such as an integrated access device (IAD, Integrated Access Device), an access gateway (AG, Access Gateway), a trunk gateway (TG, Trunk Gateway), and an optical network terminal (ONT, Optical Network Terminal), and may also be implemented on another similar network entity.

As can be seen from the above, in this embodiment, the current impairment index of the network is monitored; and the number of redundant blocks carried in the data packet to be sent and/or the packetization duration of the data packet to be sent is determined according to the transport quality grade corresponding to the monitored current impairment index of the network. In this manner, the current transport quality of the network has a real-time correlation with the number of redundant blocks carried in the data packet and/or the packetization duration of the data packet, which improves flexibility of transport control and is beneficial to appropriate adaptation to real-time dynamic changes of a network impairment condition.

**Embodiment 2**

For better understanding of the technical solutions disclosed in the embodiments of the present invention, the following uses a case where a terminal S1 exchanges audio data and makes a conversation with a terminal S2 through access devices N1 and N2 as an example to describe the technical solutions in the embodiment of the present invention in further detail.

N1 is an access device of the terminal S1, and N2 is an access device of the terminal S2. This embodiment uses RTP packet exchanging between the access devices N1 and N2 as an example for illustration.

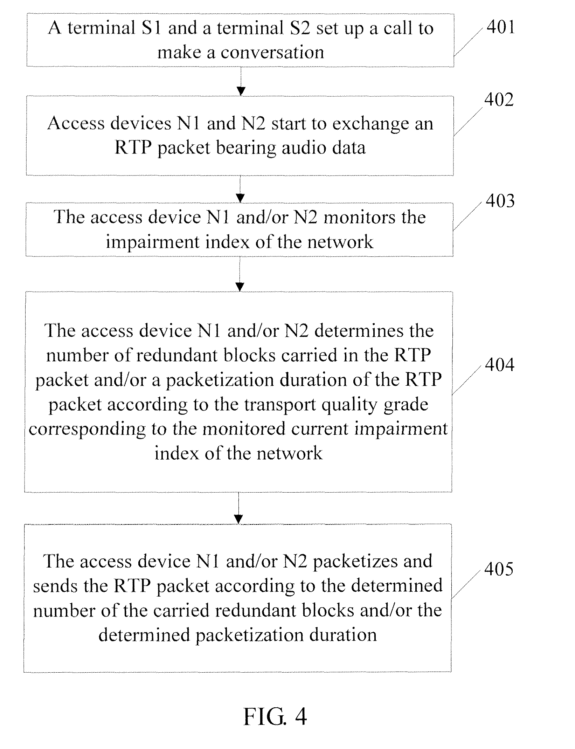

Referring to FIG. 4, a transport control method according to Embodiment 2 of the present invention may include the following steps:

　　401. The terminal S1 and the terminal S2 set up a call to make a conversation.
　　402. The access devices N1 and N2 start to exchange an RTP packet bearing audio data.

In an actual application, when the terminal S1 and the terminal S2 start the conversation, the access devices N1 and N2 start bearing the audio data by using the RTP to exchange the audio data between the terminal S1 and the terminal S2 in real time.

A header of the RTP packet may carry related information that is used to restore the audio data borne in the RTP packet. A format of the header of the RTP packet may be as follows:

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|V=2|P|X|  CC   |M|     PT      |       sequence number         |
+-+-+-+-+-+-+-+-+-+-+-+-+-+-+-+-+-+-+-+-+-+-+-+-+-+-+-+-+-+-+-+-+
|                           timestamp                           |
+-+-+-+-+-+-+-+-+-+-+-+-+-+-+-+-+-+-+-+-+-+-+-+-+-+-+-+-+-+-+-+-+
|           synchronization source (SSRC) identifier           |
+=+=+=+=+=+=+=+=+=+=+=+=+=+=+=+=+=+=+=+=+=+=+=+=+=+=+=+=+=+=+=+=+
```

Fields in the said header of the RTP packet are as follows:

V: an RTP version number;
P: a padding indicator bit. If a value of this field is 1, it is indicated that one or multiple extra padding bytes are included at the end of the packet.
X: an extension indicator bit. If a value of this field is 1, it is indicated that an extension header follows a fixed header;
CC: a CSRC count indicating the number of CSRC identifiers that follow the fixed header;
M: a flag bit that may be used to indicate a frame boundary flag in an RTP packet stream;
PT: a payload type indicating a type of payload data of the RTP packet;
sequence number: a sequence number of the RTP packet;
timestamp: a timestamp indicating a sampling instant of the first byte of the audio data in the RTP packet; and
SRRC: a synchronization source identifier identifying a synchronization source of each signal in an RTP session.

After receiving the RTP packet sent by a peer end, the access device N1 or N2 restores the audio data borne in the received RTP packet by using the related information carried in each filed in the header of the RTP packet, and sends the restored audio data to a corresponding terminal.

Further, for ease of monitoring a network impairment condition in real time, the access devices N1 and N2 may further enable an RTP Control Protocol (RTCP, RTP control Protocol) function so that transport of the RTP packet on the network is monitored in real time by exchanging an RTCP packet.

A basic idea of RTCP includes: using a transport mechanism that is the same as that used for data grouping, and periodically transporting a control packet to all attendees in an RTP session, and thereby providing a method for monitoring quality of service (QoS) of data transport, wherein the RTCP implements the following functions:

providing feedback information about data transport quality, and transporting a permanent identifier of an RTP source transport layer;
determining a rate for sending the RTCP packet, and transporting a small amount of session control information.

The packet type defined in RTCP includes: a sender report (SR, Sender Report), a receiver report (RR, Receiver Report), a source description option, an indication of end of session, a specified application function, and so on.

The SR mainly carries information about a sending condition of the RTP packet of an access device; and the RR mainly carries information about a receiving condition of the RTP packet of the access device.

403. The access device N1 and/or N2 monitors an impairment index of the network.

In an application scenario, the access device N1 or N2 may receive an RTCP packet sent by the peer end, and the impairment index, such as the current packet loss ratio and delay, of the network may be obtained by using the currently received RTCP packet.

For example, a format of an RTCP packet that includes both the SR and the RR and is sent by the peer end and received by access device N1 or N2 is as follows:

```
                0                   1                   2                   3
                0 1 2 3 4 5 6 7 8 9 0 1 2 3 4 5 6 7 8 9 0 1 2 3 4 5 6 7 8 9 0 1
                +-+-+-+-+-+-+-+-+-+-+-+-+-+-+-+-+-+-+-+-+-+-+-+-+-+-+-+-+-+-+-+-+
      header    |V=2|P|   RC    |   PT=SR=200   |             length            |
                +-+-+-+-+-+-+-+-+-+-+-+-+-+-+-+-+-+-+-+-+-+-+-+-+-+-+-+-+-+-+-+-+
                |                         SSRC of sender                        |
                +=+=+=+=+=+=+=+=+=+=+=+=+=+=+=+=+=+=+=+=+=+=+=+=+=+=+=+=+=+=+=+=+
      sender    |               NTP timestamp, most significant word            |
      block      +-+-+-+-+-+-+-+-+-+-+-+-+-+-+-+-+-+-+-+-+-+-+-+-+-+-+-+-+-+-+-+-+
                |               NTP timestamp, least significant word           |
                +-+-+-+-+-+-+-+-+-+-+-+-+-+-+-+-+-+-+-+-+-+-+-+-+-+-+-+-+-+-+-+-+
                |                         RTP timestamp                         |
                +-+-+-+-+-+-+-+-+-+-+-+-+-+-+-+-+-+-+-+-+-+-+-+-+-+-+-+-+-+-+-+-+
                |                     sender's packet count                     |
                +-+-+-+-+-+-+-+-+-+-+-+-+-+-+-+-+-+-+-+-+-+-+-+-+-+-+-+-+-+-+-+-+
                |                      sender's octet count                     |
                +=+=+=+=+=+=+=+=+=+=+=+=+=+=+=+=+=+=+=+=+=+=+=+=+=+=+=+=+=+=+=+=+
      receiver  |                 SSRC_1 (SSRC of first source)                 |
      block      +-+-+-+-+-+-+-+-+-+-+-+-+-+-+-+-+-+-+-+-+-+-+-+-+-+-+-+-+-+-+-+-+
                | fraction lost |        cumulative number of packets lost      |
                +-+-+-+-+-+-+-+-+-+-+-+-+-+-+-+-+-+-+-+-+-+-+-+-+-+-+-+-+-+-+-+-+
                |             extended highest sequence number received         |
                +-+-+-+-+-+-+-+-+-+-+-+-+-+-+-+-+-+-+-+-+-+-+-+-+-+-+-+-+-+-+-+-+
                |                       interarrival jitter                     |
                +-+-+-+-+-+-+-+-+-+-+-+-+-+-+-+-+-+-+-+-+-+-+-+-+-+-+-+-+-+-+-+-+
                |                          last SR (LSR)                        |
                +-+-+-+-+-+-+-+-+-+-+-+-+-+-+-+-+-+-+-+-+-+-+-+-+-+-+-+-+-+-+-+-+
                |                     delay since last SR (DLSR)                 |
                +=+=+=+=+=+=+=+=+=+=+=+=+=+=+=+=+=+=+=+=+=+=+=+=+=+=+=+=+=+=+=+=+
```

Fields in the preceding RR block (receiver block) of the RTCP packet are as follows:

the fraction lost field carries information about a packet loss ratio of the RTP data packet sent from SSRC_n (the access devices N1 and N2) since a previous SR or RR was sent;

the cumulative number of packets lost field carries information about the total number of RTP packets from SSRC_n that are lost since the beginning of RTP packet reception;

the last SR field carries the middle 32 bits of a Network timestamp (NTP, Network Time Protocol) in a latest received SR packet from SSRC-n; and

the delay since last SR field carries a delay between receiving the latest SR from SSRC_n and sending this RTCP packet.

$$Delay = AT - LSR - DSLR \qquad (formula\ 1)$$

The access device N1 or N2 may calculate the current delay of the network by using formula 1, where AT is the time when the access device N1 receives the RTCP packet. In addition, the access device N1 or N2 may directly use the packet loss ratio carried in the packet loss ratio filed of the RR as the current packet loss ratio of the network. That is to say, the access device N1 or N2 may obtain the impairment index, such as the current packet loss ratio and delay, of the network by using the currently received RTCP packet that is sent by the peer end and carries the RR.

Accordingly, the access device N 1 or N2 also generates an RR according to a condition of receiving the RTP packet by itself and the information carried by the SR, and sends the RR to the peer end by using the RTCP packet. In this manner, bidirectional monitoring is implemented.

It can be seen that implementation complexity of monitoring the impairment index of the network by the access device N1 and/or N2 may be reduced.

404. The access device N1 and/or N2 determines the number of redundant blocks carried in the RTP packet to be sent and/or a packetization duration of the RTP packet to be sent according to a transport quality grade corresponding to the monitored current impairment index of the network.

In an application scenario, the access device N1 and/or N2 may establish a mapping relationship between the impairment index of the network and the transport quality grade (for example, may establish: a mapping relationship between the packet loss ratio of the network and a transport packet loss quality grade, a mapping relationship between the delay of the network and a transport delay quality grade, and so on); and presets a mapping relationship between the number of redundant blocks carried in the RTP packet and/or the packetization duration of the RTP packet and the transport quality grade.

The access device N1 and/or N2 may determine the current transport quality grade of the network according to the monitored current impairment index of the network, and determine, according to the current transport quality grade of the network, the number of redundant blocks carried in the RTP packet to be sent and/or the packetization duration of the RTP packet to be sent. The transport quality grade of the network may be specifically determined according to a specific requirement.

For example, the access device N1 and/or N2 may set four transport packet loss quality grades, A1 (good), A2 (normal), A3 (poor) and A4 (bad). Each transport packet loss quality grade corresponds to a particular range of packet loss ratio. For example, a packet loss ratio corresponding to the grade A1 is 0%, a range of packet loss ratio corresponding to the grade A2 is 0%-1%, a range of packet loss ratio corresponding to the grade A3 is 1%-3%, and a range of packet loss ratio corresponding to the grade A4 is greater than 3%. The number of redundant blocks corresponding to the grade A1 may be 0, the number of redundant blocks corresponding to the grade A2 may be 1, the number of redundant blocks corresponding to the grade A3 may be 2, and the number of redundant blocks corresponding to the grade A4 may be 3 or a larger value. For example, if the transport packet loss quality grade corresponding to the current packet loss ratio of the network is A3, it is determined that the number of redundant blocks carried in the RTP packet to be sent is 2, and so on.

Similarly, the access device N1 and/or N2 may also set two transport delay quality grades: B1 (good) and B2 (poor). Each transport delay quality grade corresponds to a particular range of delay. For example, a range of delay corresponding to the grade B1 is shorter than 100 ms, and a range of delay corresponding to the grade B2 is longer than 100 ms. A preset packetization duration corresponding to the grade B1 may be 20 ms, and a preset packetization duration corresponding to the grade B2 may be 10 ms. For example, if the transport delay quality grade corresponding to the current delay of the network is B2, it is determined that the packetization duration of the RTP packet to be sent is 10 ms, and so on.

405. The access device N1 and/or N2 packetizes and sends the RTP packet according to the determined number of the carried redundant blocks and/or the determined packetization duration.

In the actual application, after determining the number of redundant blocks carried in the RTP packet to be sent and/or the packetization duration of the RTP packet to be sent, the access device N1 and/or N2 may packetize and send the RTP packet according to the determined number of the carried redundant blocks and/or the determined packetization duration. After receiving the RTP packet, the peer end restores the audio data borne by the RTP packet, and sends the audio data to a terminal.

According to this embodiment, a redundant payload format selected and used by the RTP packet may be RFC 2198, a forward error correction code format, or another redundancy format.

Considering that the impairment index (such as the packet loss ratio and the delay) of the network may continuously change with time, and the access device N1 and/or N2 may monitor the impairment index of the network in real time and adjust, in real time according to the current impairment index of the network, the number of redundant blocks carried in the RTP packet to be sent and/or the packetization duration of the RTP packet to be sent, and so on.

In an application scenario, if the access device N1 or N2 fails to correctly restore the audio data borne in the received RTP packet in a case where the number of redundant blocks carried in the RTP packet and/or the packetization duration of the RTP packet fails to be known after the peer end adjusts the RTP packet. In this case, after adjusting the number of redundant blocks carried in the RTP packet and/or the packetization duration of the RTP packet, the access device N1 or N2 may notify the adjusted number of redundant blocks carried in the RTP packet and/or packetization duration of the RTP packet, and so on, to the peer end. The notifying manner may be arbitrary. For example, the adjusted number of redundant blocks carried in the RTP packet and/or packetization duration of the RTP packet may be notified to the peer end by using Session Initiation Protocol (SIP, Session Initiation Protocol) signaling. Definitely, if the access devices N1 and N2 are capable of directly knowing the number of redundant blocks carried in the RTP packet and/or the packetization duration of the RTP packet and directly and correctly restoring the audio data borne in the RTP packet after receiving the RTP packet, the access devices N1 and N2 may not notify the adjusted number of redundant blocks carried in the RTP packet and/or packetization duration of the RTP packet to the peer end after adjusting the number of redundant blocks carried in the RTP packet and/or the packetization duration of the RTP packet.

For ease of better understanding of the technical solutions in the embodiments of the present invention, the following further describes the technical solutions by using a specific example.

In the following description, an RTP packet using RFC 2198 as the redundant payload format is used as an example. A format of an RFC 1298 redundant block header may be as follows:

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|F|  block PT   |    timestamp offset    |    block length     |
+-+-+-+-+-+-+-+-+-+-+-+-+-+-+-+-+-+-+-+-+-+-+-+-+-+-+-+-+-+-+-+-+
```

Flag bit (F): the first bit of the redundant block header, used to indicate whether another header block follows. If a value of this bit is 1, it is indicated that another header block follows; if the value of this bit is 0, it is indicated that no header block follows;

block payload type (block PT): seven bits, used to indicate an RTP payload type of this block;

timestamp offset (timestamp offset): 14 bits, used to indicate an unsigned timestamp offset of this block relative to a timestamp in RTP header. The use of an unsigned offset implies redundant data needs to be sent after primary data is sent. Therefore, a timestamp of a block where the redundancy data is located is determined by subtracting sending time of the primary data from the current timestamp; and

block length: 10 bits, used to indicate the byte length of a corresponding data block, where the byte length excludes the length of a header.

For example, when the terminal S1 and the terminal S2 set up a call and make a conversation, the access devices N1 and N2 start exchanging the RTP packet bearing the audio data in real time, and enable the RTCP function to monitor the impairment index, such as the packet loss ratio and the delay, of the network.

If the access device N1 monitors, by receiving an RTCP packet sent by the access device N2, that the current packet loss ratio of the network becomes 0.8%, the current delay is 30 ms, the transport packet loss quality grade corresponding to the current packet loss ratio is A2, and the transport delay quality grade corresponding to the current delay is B1. Therefore, the access device N1 enables RFC 2198 redundancy control, determines that the number of redundant blocks carried in the RTP packet to be sent is 1 and the packetization duration of the RTP packet to be sent is 20 ms, starts packetization according to the determined number of the redundant blocks and the determined packetization duration, and sends the RTP packet to the access device N1.

A format of the RTP packet packetized and sent by the access device N1 may be, for example, as follows:

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|V=2|P|X| CC=0  |M|      PT       |  sequence number of primary  |
|                                 |            data              |
+-+-+-+-+-+-+-+-+-+-+-+-+-+-+-+-+-+-+-+-+-+-+-+-+-+-+-+-+-+-+-+-+
|                    timestamp of primary coding                 |
+-+-+-+-+-+-+-+-+-+-+-+-+-+-+-+-+-+-+-+-+-+-+-+-+-+-+-+-+-+-+-+-+
|              synchronization source (SSRC) identifier          |
+-+-+-+-+-+-+-+-+-+-+-+-+-+-+-+-+-+-+-+-+-+-+-+-+-+-+-+-+-+-+-+-+
|1| block PT=8  |    timestamp offset    |    block length       |
+-+-+-+-+-+-+-+-+-+-+-+-+-+-+-+-+-+-+-+-+-+-+-+-+-+-+-+-+-+-+-+-+
|0| block PT=8  |                                                |
+-+-+-+-+-+-+-+-+                                                +
|                                                               |
+          G. 711A encoded redundant                            +
|          data (PT = 8) (160 bytes)         +---------------+  |
+                                            |               |  +
|                                            |               |  |
+-+-+-+-+-+-+-+-+-+-+-+-+-+-+-+-+-+-+-+-+-+-+-+               +
|                                                            |  |
+                                                            +  +
|          G. 711A encoded primary                           |  |
+          data (PT = 8) (160 bytes)                         +  +
/                                                            /  /
+                                            +---------------+  +
|                                            |                  |
+-+-+-+-+-+-+-+-+-+-+-+-+-+-+-+-+-+-+-+-+-+-+-+
```

The RTP packet that bears the audio data and is packetized and sent by the access device N1 includes a primary data block and a redundant block. The length of both blocks is 20 ms. After receiving the RTP packet, the access device N2 restores the audio data borne in the data block and may restore audio data of a previously lost packet by using the redundant block. In this manner, a data loss due to a packet loss of the network is compensated.

It should be understood that the access device N1 and/or N2 may adjust, according to the current impairment index of the network, the number of redundant blocks carried in the RTP packet and the packetization duration of the RTP packet in real time to try to reasonably and effectively eliminate an impact of a network impairment on speech quality of the terminal S1 and the terminal S2.

As can be seen from the above, in this embodiment, the current impairment index of the network is monitored; the number of redundant blocks carried in the data packet to be sent and/or the packetization duration of the data packet to be sent is determined according to the transport quality grade corresponding to the monitored current impairment index of the network. In this manner, the current transport quality of the network has a real-time correlation with the number of redundant blocks carried in the data packet and/or packetization duration of the data packet, which improves flexibility of transport control and is beneficial to appropriate adaptation to real-time dynamic changes of a network impairment condition.

Further, the RTCP is selected as an implementation method for monitoring the impairment index of the network, RFC 2198 is selected as the redundant payload format of the RTP packet. In this manner, the implementation complexity may further be reduced.

To better implement the technical solutions in the embodiment of the present invention, an embodiment of the present invention further provides an access device.

Embodiment 3

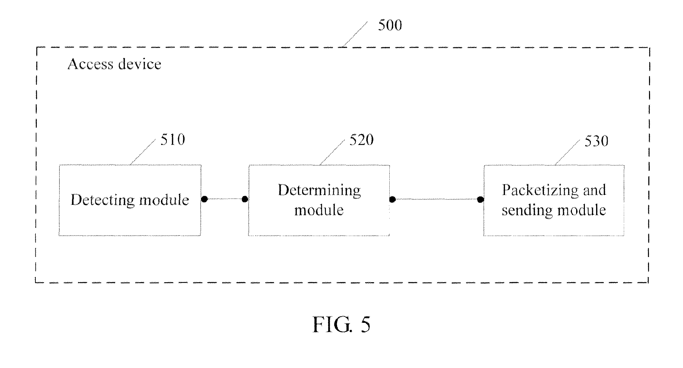

Referring to FIG. 5, an access device 500 according to the third embodiment of the present invention may specifically include: a monitoring module 510, a determining module 520, and a packetizing and sending module 530.

The monitoring module 510 is configured to monitor a current impairment index of a network.

In an actual application, the monitoring module 510 may select multiple modes to monitor the current impairment index of the network. For example, the current impairment index of the network can be obtained by receiving a related data packet.

The determining module 520 is configured to determine, according to a transport quality grade corresponding to the current impairment index of the network monitored by the monitoring module 510, the number of redundant blocks carried in a data packet to be sent and/or a packetization duration of the data packet to be sent, wherein the number of redundant blocks carried in the data packet and/or the packetization duration of the data packet has a preset mapping relationship with a transport quality grade.

In an application scenario, the access device 500 may establish a mapping relationship between the impairment index of the network and the transport quality grade, and preset a mapping relationship between the number of redundant blocks carried in the data packet and/or the packetization duration of the data packet and the transport quality grade. In this manner, the current transport quality grade of the network may be determined according to the monitored current impairment index of the network, and the number of redundant blocks carried in the data packet to be sent and/or the packetization duration of redundant blocks carried in the data packet to be sent may be determined according to the current transport quality grade of the network.

That is to say, the determining module 520 may determine, according to a transport quality grade corresponding to the current packet loss ratio of the network monitored by the monitoring module 510, the number of redundant blocks carried in the data packet to be sent; and/or determine, according to a transport quality grade corresponding to the current delay of the network monitored by the monitoring module 510, the packetization duration of the data packet to be sent.

The packetizing and sending module 530 is configured to packetize and send the data packet according to the number of the carried redundant blocks and/or the packetization duration determined by the determining module 520.

In the actual application, after the determining module 520 determines the number of redundant blocks carried in the data packet to be sent and/or the packetization duration of the data packet to be sent, the packetizing and sending module 530 packetizes and sends the data packet according to the determined number of the carried redundant blocks and/or the packetization duration. After receiving the data packet, a receiving device restores service data borne by the data packet.

The data packet packetized and sent by the packetizing and sending module 530 may be an RTP packet or a data packet of another type. The borne service data may be, for example, audio data or service data of another type. A format of a redundant block carried in the data packet may be RFC 2198.

In an application scenario, the monitoring module 510 may include:

a receiving submodule, configured to receive an RTCP packet; and
an obtaining submodule, configured to obtain a current packet loss ratio and/or delay of the network according to the RTCP packet received by the receiving submodule.

For example, the RTCP packet received by the receiving submodule bears an RR, and the obtaining submodule may obtain the current packet loss ratio and/or delay of the network by using the RR received by the receiving submodule.
In an application scenario, the determining module 520 may include:

a first determining submodule, configured to determine, according to the transport quality grade corresponding to the current packet loss ratio of the network monitored by the monitoring module, the number of redundant blocks carried in the data packet to be sent;
and/or
a second determining submodule, configured to determine, according to the transport quality grade corresponding to the current delay of the network monitored by the monitoring module, the packetization duration of the data packet to be sent.

In an application scenario, the access device 500 may further include:

a notifying module, configured to, when the number of redundant blocks carried in the data packet and/or the packetization duration of the data packet is adjusted, notify the receiving device of the adjusted number of redundant blocks carried in the data packet and/or packetization duration of the data packet.

It should be noted that the access device 500 in this embodiment may be the access device N1 or N2 in the preceding method embodiments, and may be used to implement all technical solutions in the preceding method embodiments. A function of each functional module may be implemented according to the methods in the preceding method embodiments. For a specific implementation process, reference may be made to the relevant description in the preceding embodiments, and no further description is provided here.
To better implement the technical solutions in the preceding embodiments of the present invention, an embodiment of the present invention further provides a transport system, which may include multiple access devices 500 as described in Embodiment 3.
It should be noted that the preceding method embodiments are described with reference to a series of action combinations for ease of illustration. However, those skilled in the art should know that the present invention is not limited to the described action sequence for a reason that some steps may take other sequences or be performed at the same time according to the present invention. In addition, those skilled in the art should know that the embodiments described in the specification are exemplary embodiments, and the involved actions and modules are not definitely needed in the present invention.
In the preceding embodiments, the description about each embodiment has a focus. For a part that is not described in detail in one embodiment, reference may be made to the relevant description in another embodiment.
In conclusion, in the embodiments of the present invention, the current impairment index of the network is monitored; and the number of redundant blocks carried in the data packet to be sent and/or the packetization duration of the data packet to be sent is determined according to the transport quality grade corresponding to the monitored current impairment index of the network. In this manner, the current transport quality of the network has a real-time correlation with the number of redundant blocks carried in the data packet and/or the packetization duration of the data packet, which improves flexibility of transport control and is beneficial to appropriate adaptation to real-time dynamic changes of a network impairment condition.
Further, if the RTCP is selected as an implementation method for monitoring the impairment index of the network and RFC 2198 is selected as a redundant payload format of the data packet, the implementation complexity may be further reduced.
Persons of ordinary skill in the art may understand that all or part of the steps of the various methods in the preceding embodiments may be implemented by hardware following an instruction of a program. The program may be stored in a computer readable storage medium. The storage medium may include a read-only memory (ROM, Read-Only Memory), a random access memory (RAM, Random Access Memory), a magnetic disk, or a compact disk-read only memory (CD-ROM).
The foregoing describes the transport control method, the access device, and the transport system according to the embodiments of the present invention in detail. The principles and implementation manner of the present invention are illustrated using specific examples. The description about the preceding embodiments is merely used to help understanding of the methods and core ideas of the present invention. In addition, with respect to the implementation and applicability of the present invention, modifications and variations may be made by persons of ordinary skill in the art according to the idea of the present invention. Therefore, the specification shall not be construed as a limitation on the present invention.

**Claims**

1. A transport control method, comprising:

    monitoring a current impairment index of a network;
    determining, according to a transport quality grade corresponding to the monitored current impairment index of the network, the number of redundant blocks carried in a data packet to be sent and/or a packetization duration of the data packet to be sent, wherein the number of redundant blocks carried in the data packet and/or the packetization duration of the data packet has a preset mapping relationship with a transport quality grade; and
    packetizing and sending the data packet according to the determined number of the carried redundant blocks and/or the determined packetization duration.

2. The method according to claim 1, wherein
   the monitoring a current impairment index of a network comprises:

    receiving a Real-Time Transport Control Protocol, RTCP, packet; and
    obtaining a current packet loss ratio and/or delay of the network according to the received RTCP packet.

3. The method according to claim 1 or 2, wherein the determining, according to a transport quality grade corresponding to the monitored current impairment index of the network, the number of redundant blocks carried in a data packet to be sent and/or a packetization duration of the data packet to be sent comprises:

    determining, according to a transport quality grade corresponding to the monitored current packet loss ratio of the network, the number of redundant blocks carried in the data packet to be sent;
    and/or
    determining, according to a transport quality grade corresponding to the monitored current delay of the network, the packetization duration of the data packet to be sent.

4. The method according to claim 1 or 2, further comprising:

    if the number of redundant blocks carried in the data packet and/or the packetization of the data packet is adjusted, notifying a receiving device of the adjusted number of redundant blocks carried in the data packet and/or packetization duration of the data packet.

5. The method according to claim 4, wherein the notifying the receiving device of the adjusted number of redundant blocks carried in the data packet and/or packetization duration of the data packet comprises:

    notifying the receiving device of the adjusted number of redundant blocks carried in the data packet and/or packetization duration of the data packet by using a Session Initiation Protocol SIP signaling.

6. The method according to claim 1 or 2, wherein
   the data packet is a Real-Time Transport Protocol, RTP, data packet, and a format of a redundant block carried in the data packet is RFC 2198.

7. An access device, comprising:

    a monitoring module, configured to monitor a current impairment index of a network;
    a determining module, configured to determine, according to a transport quality grade corresponding to the current impairment index of the network monitored by the monitoring module, the number of redundant blocks carried in a data packet to be sent and/or a packetization duration of the data packet to be sent, wherein the number of redundant blocks carried in the data packet and/or the packetization duration of the data packet has a preset mapping relationship with a transport quality grade; and
    a packetizing and sending module, configured to packetize and send the data packet according to the number of the carried redundant blocks and/or the packetization duration determined by the determining module.

**8.** The access device according to claim 7, wherein the monitoring module comprises:

a receiving submodule, configured to receive a Real-Time Transport Control Protocol, RTCP, packet; and
an obtaining submodule, configured to obtain a current packet loss ratio and/or delay of the network according to the RTCP packet received by the receiving submodule.

**9.** The access device according to claim 7 or 8, wherein the determining module comprises:

a first determining submodule, configured to determine, according to a transport quality grade corresponding to the current packet loss ratio of the network monitored by the monitoring module, the number of redundant blocks carried in the data packet to be sent;
and/or
a second determining submodule, configured to determine, according to a transport quality grade corresponding to the current delay of the network monitored by the monitoring module, the packetization duration of the data packet to be sent.

**10.** The access device according to claim 7 or 8, wherein the access device further comprises:

a notifying module, configured to, when the number of redundant blocks carried in the data packet and/or the packetization duration of the data packet is adjusted, notify a receiving device of the adjusted number of redundant blocks carried in the data packet and/or packetization duration of the data packet.

**11.** A transport system, comprising:

the access device according to any one of claims 7 to 10.

FIG. 1

FIG. 2

Monitor a current impairment index of a network ⌐310

Determine, according to a transport quality grade corresponding to the monitored current impairment index of the network, the number of redundant blocks carried in a data packet to be sent and/or a packetization duration of the data packet to be sent, where the number of redundant blocks carried in the data packet and/or the packetization duration of the data packet has a preset mapping relationship with a transport quality grade ⌐320

Packetize and send the data packet according to the determined number of the carried redundant blocks and/or the determined packetization duration ⌐330

FIG. 3

A terminal S1 and a terminal S2 set up a call to make a conversation /401

Access devices N1 and N2 start to exchange an RTP packet bearing audio data /402

The access device N1 and/or N2 monitors the impairment index of the network /403

The access device N1 and/or N2 determines the number of redundant blocks carried in the RTP packet and/or a packetization duration of the RTP packet according to the transport quality grade corresponding to the monitored current impairment index of the network /404

The access device N1 and/or N2 packetizes and sends the RTP packet according to the determined number of the carried redundant blocks and/or the determined packetization duration /405

FIG. 4

/ 500

┌─────────────────────────────────────────────────────────────────────┐
│ Access device                                                          │
│                                                                        │
│      / 510              / 520                    / 530                  │
│  ┌──────────────┐   ┌──────────────┐      ┌──────────────────┐        │
│  │              │   │  Determining │      │ Packetizing and  │        │
│  │  Detecting module │   │  module      │      │ sending module   │        │
│  │              │   │              │      │                  │        │
│  └──────────────┘   └──────────────┘      └──────────────────┘        │
│                                                                        │
└─────────────────────────────────────────────────────────────────────┘

FIG. 5

# INTERNATIONAL SEARCH REPORT

| | International application No. |
|---|---|
| | PCT/CN2010/079428 |

**A. CLASSIFICATION OF SUBJECT MATTER**

H04L 12/26(2006.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNPAT;WPI;EPODOC;CNKI

transmit,network,damage,data,pack,send,sent,transfer,control,manage,detect,monitor,damage,fault,failure,quality,degree,grade,redundancy

**C. DOCUMENTS CONSIDERED TO BE RELEVANT**

| Category* | Citation of document, with indication, where appropriate, of the relevant passages | Relevant to claim No. |
|---|---|---|
| PX | CN101729320A (HUAWEI TECHNOLOGIES CO LTD) 09 June 2010(09.06.2010) see claims 1-11 | 1-11 |
| A | CN101192999A (ZTE COMMUNICATION CO LTD) 04 June 2008(04.06.2008) see the whole document | 1-11 |
| A | GB2384394A (INMARSAT LTD) 23 July 2003(23.07.2003) see the whole document | 1-11 |

☐ Further documents are listed in the continuation of Box C.    ☒ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim (S) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&" document member of the same patent family |

| Date of the actual completion of the international search | Date of mailing of the international search report |
|---|---|
| **01 March 2011(01.03.2011)** | **10 Mar. 2011 (10.03.2011)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>    **ZHAO,Weihua**<br><br>Telephone No. (86-10)62411830 |
|---|---|

Form PCT/ISA /210 (second sheet) (July 2009)

**INTERNATIONAL SEARCH REPORT**
Information on patent family members

| International application No. |
| --- |
| PCT/CN2010/079428 |

| Patent Documents referred in the Report | Publication Date | Patent Family | Publication Date |
| --- | --- | --- | --- |
| CN101729320A | 09.06.2010 | None | |
| CN101192999A | 04.06.2008 | CN101192999B | 12.05.2010 |
| GB2384394A | 23.07.2003 | WO03063405A1 | 31.07.2003 |
| | | AU2003201696A1 | 02.09.2003 |
| | | EP1468516A1 | 20.10.2004 |
| | | NO20043403A | 23.09.2004 |
| | | US2006023717A1 | 02.02.2006 |
| | | AU2003201696B2 | 30.08.2007 |
| | | EP1468516B1 | 28.07.2010 |
| | | DE60333543E | 09.09.2010 |
| | | AT476025T | 15.08.2010 |
| | | CA2473382A1 | 31.07.2003 |
| | | DK1468516T3 | 22.11.2010 |
| | | ES2349629T3 | 01.07.2011 |

Form PCT/ISA /210 (patent family annex) (July 2009)